# EUROPÄISCHE PATENTSCHRIFT

(11) **EP 3 292 000 B1**
(45) Veröffentlichungstag und Bekanntmachung des Hinweises auf die Patenterteilung: **13.01.2021**
(21) Anmeldenummer: 16715537.3
(22) Anmeldetag: 11.04.2016
(51) Int. Cl.: B60B 5/02, B60B 21/00

(54) **FAHRZEUGFELGE SOWIE FAHRZEUGRAD MIT FAHRZEUGFELGE**
VEHICLE RIM AND VEHICLE WHEEL HAVING A VEHICLE RIM
JANTE DE VÉHICULE ET ROUE DE VÉHICULE COMPORTANT UNE JANTE DE VÉHICULE

(30) Priorität: 04.05.2015 DE 102015208187
(43) Veröffentlichungstag der Anmeldung: 14.03.2018
(73) Patentinhaber: Bayerische Motoren Werke Aktiengesellschaft, 80809 München (DE)
(72) Erfinder: FISCHER, Stephan, 82178 Puchheim (DE); GORDNER, Achim, 85253 Grossberghofen (DE); JÄGER, Elmar, 87439 Kempten im Allgäu (DE); SEIDL, Josef, 84130 Dingolfing (DE); SUMMERER, Paul, 84091 Attenhofen (DE)
(86) Internationale Anmeldenummer: PCT/EP2016/057896
(87) Internationale Veröffentlichungsnummer: WO 2016/177539

(56) Entgegenhaltungen:
- WO-A1-2014/044237
- DE-A1- 1 505 880
- FR-A3- 2 890 897
- US-A- 4 409 586
- US-A1- 2006 098 389
- US-B1- 6 357 833

## Beschreibung

Es wird eine Fahrzeugfelge angegeben. Bei der Fahrzeugfelge kann es sich beispielsweise um eine Motorradfelge handeln. Weiterhin wird ein Fahrzeugrad, das eine Fahrzeugfelge aufweist, angegeben.

Die Druckschrift DE 15 05 880 A1 beschreibt eine Vorrichtung zur drahtlosen Übertragung von Messwerten an Kraftfahrzeugrädern und -bereifungen.

Weiterhin ist bekannt, dass sogenannte Superkondensatoren, die auch als Supercaps oder Ultrakondensatoren bezeichnet werden, in vielfältiger Weise in Fahrzeugen aller Art eingesetzt werden. Die Superkondensatoren werden dabei im Stand der Technik als separate Bauteile, welche ein Gehäuse und Kondensatorelemente wie die Kondensatorelektroden aufweisen, in die Fahrzeuge eingebaut.

Aufgrund der als separate Bauteile ausgeführten Kondensatoren wird für deren Einbau im Fahrzeug ein bestimmter Mindestbauraum benötigt. Weiterhin steigt durch den Einbau das Gewicht der Fahrzeuge.

Es ist eine zu lösende Aufgabe zumindest einiger Ausführungsformen, eine Fahrzeugfelge anzugeben, die zumindest einen Kondensator aufweist, wobei der benötigte Bauraum und das Gewicht verringert werden können.

Diese Aufgabe wird durch einen Gegenstand gemäß dem unabhängigen Patentanspruch gelöst. Vorteilhafte Ausführungsformen und Weiterbildungen gehen weiterhin aus den abhängigen Patentansprüchen, der nachfolgenden Beschreibung und aus den Zeichnungen hervor.

Eine Fahrzeugfelge gemäß zumindest einer Ausführungsform weist einen Felgenkörper und zumindest einen Kondensator auf. Vorzugsweise ist der Kondensator in die Fahrzeugfelge integriert. Der Felgenkörper weist vorzugsweise einen Nabenbereich, ein Felgenbett und einen Verbindungsbereich auf. Der Verbindungsbereich verbindet den Nabenbereich mit dem Felgenbett. Beispielsweise kann der Verbindungsbereich eine oder mehrere Speichen umfassen. Weiterhin kann der Verbindungsbereich beispielsweise als Scheibe ausgebildet sein.

Gemäß einer besonders bevorzugten Ausführungsform bildet der Felgenkörper zumindest einen Teil eines Gehäuses des Kondensators. Beispielsweise kann der Kondensator Kondensatorelemente aufweisen, die zumindest teilweise in einer Vertiefung des Felgenkörpers eingebettet sein können. Bei den Kondensatorelementen kann es sich z.B. um Kondensatorelektroden des Kondensators handeln. Die Kondensatorelemente können beispielsweise innerhalb der Vertiefung des Felgenkörpers in einer Vergussmasse eingebettet sein.

Gemäß einer weiteren Ausführungsform ist der Kondensator den Nabenbereich umlaufend in der Fahrzeugfelge angeordnet. Beispielsweise kann die Vertiefung des Felgenkörpers, in der die Kondensatorelemente des Kondensators angeordnet sein können, vollständig den Nabenbereich umlaufen. Vorzugsweise sind die Kondensatorelemente des Kondensators derart in einer Vertiefung des Felgenkörpers eingebettet, dass sie den Nabenbereich vollständig umlaufen.

Gemäß einer weiteren Ausführungsform ist der Felgenkörper einstückig ausgebildet. Mit anderen Worten kann der Felgenkörper, der den Nabenbereich, den Verbindungsbereich und das Felgenbett aufweisen kann bzw. daraus bestehen kann, aus einem Stück gefertigt sein.

Gemäß einer weiteren Ausführungsform weist der Felgenkörper einen Faserverbundwerkstoff auf oder besteht aus einem Faserverbundwerkstoff. Beispielsweise kann der Felgenkörper einen kohlenstofffaserverstärkten Kunststoff aufweisen oder daraus bestehen. Der Felgenkörper kann z.B. in CFK-Bauweise gewickelt sein.

Gemäß einer weiteren Ausführungsform sind die Kondensatorelemente des Kondensators gewickelt. Bei dem Kondensator kann es sich beispielsweise um einen sogenannten Wickelkondensator handeln. Beispielsweise können die Kondensatorelemente derart auf den Felgenkörper aufgewickelt sein, dass sie auf dem Felgenbett angeordnet bzw. in einer Vertiefung des Felgenbetts eingebettet den Nabenbereich umlaufen.

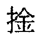 Gemäß einer weiteren Ausführungsform liegen die Kondensatorelemente Gemäß einer weiteren Ausführungsform liegen die Kondensatorelemente des Kondensators in gestapelter Form vor. Beispielsweise kann es sich bei dem Kondensator um einen Scheibenkondensator oder Vielschichtkondensator handeln.

Gemäß einer weiteren Ausführungsform sind die Kondensatorelemente des Kondensators in einer Vertiefung des Verbindungsbereichs eingebettet. Beispielsweise kann der Verbindungsbereich als Scheibe ausgebildet sein, wobei die Scheibe zumindest eine Vertiefung aufweist, in der die Kondensatorelemente zumindest teilweise eingebettet sind. Die Kondensatorelemente können z.B. scheibenförmig mit einer mittigen Ausnehmung ausgebildet sein und den Nabenbereich umlaufend in der Vertiefung angeordnet sein.

Gemäß einer weiteren Ausführungsform weist die Fahrzeugfelge zumindest einen weiteren Kondensator auf. Der weitere Kondensator kann Kondensatorelemente aufweisen, die zumindest teilweise in einer weiteren Vertiefung, beispielsweise einer weiteren Vertiefung des Verbindungsbereichs, eingebettet sein können.

Beispielsweise kann der Superkondensator eine Kapazität von mindestens 1 F aufweisen. Bevorzugt weist der Superkondensator eine Kapazität von mindestens 100 F auf. Der Superkondensator kann z.B. in Form eines gewickelten super Kondensators mit gewickelten Elektroden oder z.B. als Superkondensator mit gestapelten Elektroden vorliegen. Bei einer Ausführung mit mehreren Kondensatoren können alle Kondensatoren Superkondensatoren sein.

Gemäß einer weiteren Ausführungsform ist der Kondensator bzw. sind die Kondensatoren über Schleifringe und/oder induktiv mit einem Bordnetz eines Fahrzeugs verbunden.

Bei der hier beschriebenen Fahrzeugfelge, bei der ein Kondensator in die Fahrzeugfelge integriert ist, können vorteilhafterweise der benötigte Bauraum, das Fahrzeuggewicht und die Kosten in der Herstellung im Vergleich zum Stand der Technik verringert werden.

Weiterhin wird ein Fahrzeugrad angegeben, das eine hier beschriebene Fahrzeugfelge aufweist. Bei dem Fahrzeugrad handelt es sich beispielsweise um ein Fahrzeugrad für ein Motorrad. Das Fahrzeugrad weist vorzugsweise weiterhin einen Fahrzeugreifen auf. Vorzugsweise ist der Kondensator bzw. sind die Kondensatorelemente des Kondensators zwischen dem Felgenkörper und dem Fahrzeugreifen angeordnet.

Gemäß einer weiteren Ausführungsform weist das Fahrzeugrad einen Radnabenmotor auf, der von dem Kondensator bzw. den Kondensatoren gespeist wird. Der Radnabenmotor kann z.B. einen Umrichter umfassen, der beispielsweise über Verbindungselemente mit dem Kondensator bzw. den Kondensatoren verbunden sein kann. Signale zur Motorsteuerung können z.B. durch Schleifringe und/oder induktiv an den Umrichter übertragen werden. Weiterhin ist es möglich, dass die Signale zur Motorsteuerung per Funk an den Umrichter übertragen werden.

Weitere Vorteile und vorteilhafte Ausführungsformen der hier beschriebenen Fahrzeugfelge ergeben sich aus den im Folgenden in Verbindung mit den Figuren 1A bis 2C beschriebenen Ausführungsformen. Es zeigen:
- Fig. 1A bis 1C: schematische Darstellungen eines Fahrzeugrads mit einer hier beschriebenen Fahrzeugfelge gemäß einem ersten Ausführungsbeispiel, und
- Fig. 2A bis 2C: schematische Darstellungen eines Fahrzeugrads mit einer hier beschriebenen Fahrzeugfelge gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

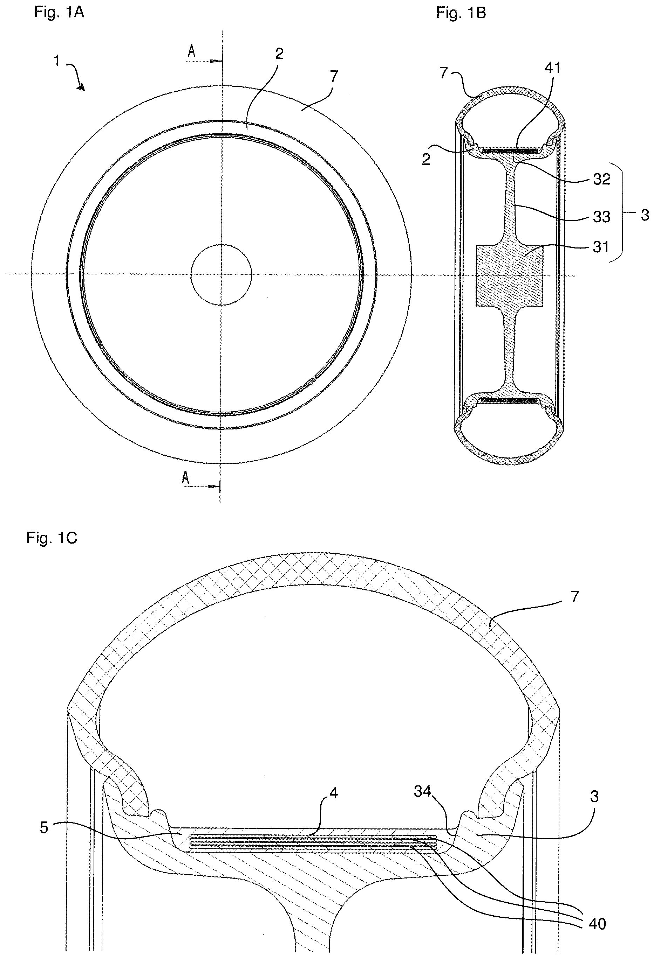

Figur 1A zeigt eine schematische Darstellung eines Fahrzeugrads 1, welches eine Fahrzeugfelge 2 und einen Fahrzeugreifen 7 aufweist. In der Figur 1B ist das Fahrzeugrad 1 aus der Figur 1A in einer Schnittansicht, welche durch einen Schnitt entlang der Linie A-A erhalten ist, gezeigt. Die Figur 1C zeigt einen Ausschnitt aus der Figur 1B in einer vergrößerten Darstellung.

Die Fahrzeugfelge 2 weist einen Felgenkörper 3 und einen Kondensator 4 auf. Der Felgenkörper 3 umfasst einen Nabenbereich 31, ein Felgenbett 32 und einen Verbindungsbereich 33, der den Nabenbereich 31 mit dem Felgenbett 32 verbindet und der speichenförmig ausgebildet ist. Der Felgenkörper 3 ist einstückig ausgebildet und besteht aus einem kohlenstofffaserverstärkten Kunststoff. Der Kondensator 4 weist eine Mehrzahl von Kondensatorelementen 40, welche die Kondensatorelektroden umfassen, auf. Die Kondensatorelemente 40 sind in einer Vertiefung 34 des Felgenbetts 32 angeordnet. Weiterhin sind die Kondensatorelemente 40 des Kondensators in einer Vergussmasse 5 eingebettet. Der Felgenkörper 3 bildet einen Teil des Gehäuses des Kondensators 4.

Die Kondensatorelemente 40 des Kondensators 4 sind auf das Felgenbett 32 auf gewickelt und umlaufen vollständig den Nabenbereich 31 des Felgenkörpers 3. Der Kondensator 4 ist als Superkondensator ausgebildet und weist eine Kapazität von mindestens 1 F auf.

Alternativ zu dem in den Figuren 1A bis 1C gezeigten Ausführungsbeispiel kann die Vertiefung 34 des Felgenbetts 32 mit einer Abdeckung versehen sein. Somit können die Kondensatorelemente 40 und die Vergussmasse 5 in einem von der Vertiefung 34 und der Abdeckung gebildeten Hohlraum eingebettet sein.

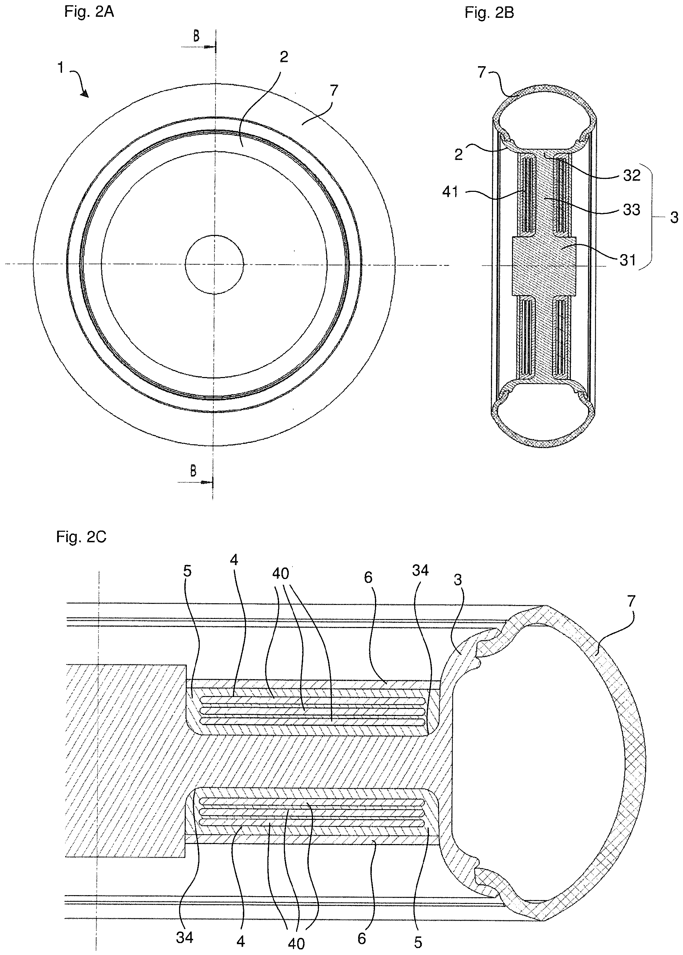

Die Figuren 2A bis 2C zeigen ein Fahrzeugrad 1 gemäß einem weiteren Ausführungsbeispiel. Die Figur 2B zeigt eine Schnittansicht durch das Fahrzeugrad 1 aus der Figur 2A, wobei die Schnittansicht durch einen Schnitt entlang der Linie B-B aus Figur 2A erhalten ist. In der Figur 2C ist ein Ausschnitt aus der Figur 2B in einer vergrößerten Darstellung gezeigt.

Das Fahrzeugrad 1 umfasst einen Fahrzeugreifen 7 und eine Fahrzeugfelge 2. Die Fahrzeugfelge weist einen Felgenkörper 3 und zwei Kondensatoren 4 auf. Der Felgenkörper 3 weist einen Nabenbereich 31, ein Felgenbett 32 und einen Verbindungsbereich 33, der den Nabenbereich 31 mit dem Felgenbett 32 verbindet und als Scheibe ausgebildet ist, auf. Der Felgenkörper 3 ist im gezeigten Ausführungsbeispiel einstückig ausgebildet und besteht aus einem kohlenstofffaserverstärkten Kunststoff.

Die Kondensatoren 4 weisen jeweils eine Mehrzahl von Kondensatorelementen 40 auf, welche Kondensatorelektroden umfassen. Die Kondensatorelemente 40 der Kondensatoren 4 sind jeweils in einer Vertiefung 34 im Verbindungsbereich 33 angeordnet und in einer Vergussmasse 5 eingebettet. Der Felgenkörper 3 der Fahrzeugfelge 2 bildet einen Teil der Gehäuse der Kondensatoren 4. Weiterhin sind die Vertiefungen 34, in welchen die Kondensatorelemente 40 mit der Vergussmasse 5 eingebettet sind, jeweils von einer Abdeckung 6 nach außen hin verschlossen.

Die zwei Vertiefungen 34, in denen die Kondensatorelemente 40 der Kondensatoren 4 eingebettet sind, sind auf zwei gegenüberliegenden Seiten des Verbindungsbereichs 33 ausgebildet. Die Kondensatorelemente 40 sind jeweils scheibenförmig mit einer Ausnehmung in der Mitte ausgebildet und aufeinander gestapelt. Somit umlaufen die Kondensatorelemente 40 vollständig den Nabenbereich 31 des Felgenkörpers 3.

Bei den Kondensatoren 4 handelt es sich um sogenannte Superkondensatoren. Beispielsweise können die Superkondensatoren jeweils eine Kapazität von mindestens 1 F aufweisen.

Bei den hier dargestellten Fahrzeugrädern kann mittels der in die Fahrzeugfelgen integrierten Kondensatoren eine Verringerung von Bauraum, Gewicht und Kosten erzielt werden.

### Bezugszeichenliste

- 1: Fahrzeugrad
- 2: Fahrzeugfelge
- 3: Felgenkörper
- 31: Nabenbereich
- 32: Felgenbett
- 33: Verbindungsbereich
- 34: Vertiefung
- 4: Kondensator
- 40: Kondensatorelemente
- 5: Vergussmasse
- 6: Abdeckung
- 7: Fahrzeugreifen

## Patentansprüche

1. Fahrzeugfelge (2), aufweisend
- einen Felgenkörper (3) mit einem Nabenbereich (31), einem Felgenbett (32) und einem Verbindungsbereich (33), der den Nabenbereich (31) mit dem Felgenbett (32) verbindet, und
- zumindest einen Kondensator (4),
- wobei der Felgenkörper (3) zumindest einen Teil eines Gehäuses des Kondensators (4) bildet,
**dadurch gekennzeichnet, dass** der Kondensator (4) ein Superkondensator ist, und dass der Kondensator (4) Kondensatorelemente (40) aufweist, welche den Nabenbereich (31) umlaufend im Felgenbett (32) eingebettet sind.

2. Fahrzeugfelge nach Anspruch 1, wobei der Kondensator (4) Kondensatorelemente (40) aufweist, die in einer Vertiefung (34) des Felgenkörpers (3) eingebettet sind.

3. Fahrzeugfelge nach einem der Ansprüche 1 oder 2, wobei der Kondensator (4) den Nabenbereich (31) umlaufend in der Fahrzeugfelge (2) angeordnet ist.

4. Fahrzeugfelge nach einem der vorhergehenden Ansprüche, wobei der Felgenkörper (3) einstückig ausgebildet ist.

5. Fahrzeugfelge nach einem der vorhergehenden Ansprüche, wobei der Felgenkörper (3) aus einem Faserverbundwerkstoff, insbesondere aus einem kohlenstofffaserverstärkten Kunststoff, besteht.

6. Fahrzeugfelge nach einem der vorhergehenden Ansprüche, wobei der Kondensator (4) Kondensatorelemente (40) aufweist, die gewickelt sind.

7. Fahrzeugfelge nach einem der Ansprüche 1 bis 6, wobei der Kondensator (4) Kondensatorelemente (40) aufweist, die gestapelt sind.

8. Fahrzeugfelge nach einem der vorhergehenden Ansprüche, wobei der Kondensator (4) Kondensatorelemente (40) aufweist, die in einer Vertiefung (34) des Verbindungsbereichs (33) eingebettet sind.

9. Fahrzeugfelge nach einem der vorhergehenden Ansprüche, aufweisend zumindest einen weiteren Kondensator (4), der Kondensatorelemente (40) aufweist, die in einer weiteren Vertiefung (34) des Verbindungsbereichs (33) eingebettet sind.

10. Fahrzeugfelge nach einem der vorhergehenden Ansprüche, wobei Kondensatorelemente (40) des Kondensators (4) zumindest teilweise von einer Vergussmasse (5) umgeben ist.

11. Fahrzeugrad (1), aufweisend eine Fahrzeugfelge (2) gemäß einem der vorhergehenden Ansprüche.

12. Fahrzeugrad gemäß Anspruch 11, aufweisend einen Fahrzeugreifen (7), wobei der Kondensator (4) zwischen dem Felgenkörper (3) und dem Fahrzeugreifen (7) angeordnet ist.

## Claims

1. Vehicle rim (2), having
- a rim body (3) with a hub region (31), a rim well (32) and a connecting region (33) which connects the hub region (31) to the rim well (32), and
- at least one capacitor (4),
- the rim body (3) forming at least one part of a housing of the capacitor (4),
**characterized in that** the capacitor (4) is a super capacitor, and **in that** the capacitor (4) has capacitor elements (40) which are embedded in the rim well (32) so as to run around the hub region (31).

2. Vehicle rim according to Claim 1, the capacitor (4) having capacitor elements (40) which are arranged in a depression (34) of the rim body (3).

3. Vehicle rim according to either of Claims 1 and 2, the capacitor (4) being arranged in the vehicle rim (2) so as to run around the hub region (31).

4. Vehicle rim according to one of the preceding claims, the rim body (3) being configured in one piece.

5. Vehicle rim according to one of the preceding claims, the rim body (3) consisting of a fibre composite material, in particular of a carbon fibre reinforced plastic.

6. Vehicle rim according to one of the preceding claims, the capacitor (4) having capacitor elements (40) which are wound.

7. Vehicle rim according to one of Claims 1 to 6, the capacitor (4) having capacitor elements (40) which are stacked.

8. Vehicle rim according to one of the preceding claims, the capacitor (4) having capacitor elements (40) which are embedded in a depression (34) of the connecting region (33).

9. Vehicle rim according to one of the preceding claims, having at least one further capacitor (4) which has capacitor elements (40) which are embedded in a further depression (34) of the connecting region (33).

10. Vehicle rim according to one of the preceding claims, capacitor elements (40) of the capacitor (4) being surrounded at least partially by a potting compound (5) .

11. Vehicle wheel (1), having a vehicle rim (2) according to one of the preceding claims.

12. Vehicle wheel according to Claim 11, having a vehicle tyre (7), the capacitor (4) being arranged between the rim body (3) and the vehicle tyre (7).

## Revendications

1. Jante de véhicule (2), comportant
- un corps de jante (3) muni d'une zone formant moyeu (31), d'une embase de jante (32) et d'une zone de liaison (33) qui relie la zone formant moyeu (31) à l'embase de jante (32), et
- au moins un condensateur (4),
- le corps de jante (3) formant au moins une partie d'un boîtier du condensateur (4),
**caractérisé en ce que** le condensateur (4) est un super-condensateur, et **en ce que** le condensateur (4) comporte des éléments de condensateur (40) qui sont incorporés dans l'embase de jante (32) circonférentiellement autour de la zone formant moyeu (31).

2. Jante de véhicule selon la revendication 1, le condensateur (4) comportant des éléments de condensateur (40) qui sont incorporés dans un évidement (34) du corps de jante (3).

3. Jante de véhicule selon l'une des revendications 1 et 2, le condensateur (4) étant disposé dans la jante de véhicule (2) circonférentiellement autour de la zone formant moyeu (31).

4. Jante de véhicule selon l'une des revendications précédentes, le corps de jante (3) étant formé d'une seule pièce.

5. Jante de véhicule selon l'une des revendications précédentes, le corps de jante (3) étant en matière composite renforcée de fibres, notamment en matière synthétique renforcée de fibres de carbone.

6. Jante de véhicule selon l'une des revendications précédentes, le condensateur (4) comportant des éléments de condensateur (40) qui sont enroulés.

7. Jante de véhicule selon l'une des revendications 1 à 6, le condensateur (4) comportant des éléments de condensateur (40) qui sont empilés.

8. Jante de véhicule selon l'une des revendications précédentes, le condensateur (4) comportant des éléments de condensateur (40) qui sont incorporés dans un évidement (34) de la zone de liaison (33).

9. Jante de véhicule selon l'une des revendications précédentes, comportant au moins un autre condensateur (4), qui comporte des éléments de condensateur (40) qui sont incorporés dans un autre évidement (34) de la zone de liaison (33).

10. Jante de véhicule selon l'une des revendications précédentes, les éléments de condensateur (40) du condensateur (4) étant au moins partiellement entourés d'un composé d'enrobage (5).

11. Roue de véhicule (1), comprenant une jante de véhicule (2) selon l'une des revendications précédentes.

12. Roue de véhicule selon la revendication 11, comprenant un pneumatique de véhicule (7), le condensateur (4) étant disposé entre le corps de jante (3) et le pneumatique de véhicule (7).
